Europäisches Patentamt

European Patent Office

Office européen des brevets

(11) Veröffentlichungsnummer: **0 503 306 B1**

(12) **EUROPÄISCHE PATENTSCHRIFT**

(45) Veröffentlichungstag der Patentschrift: **30.11.94**

(51) Int. Cl.5: **B60R 9/052**

(21) Anmeldenummer: **92102474.1**

(22) Anmeldetag: **14.02.92**

(54) **Ouerschnittsform eines Ouerträgers an einem Dachgepäckträger eines Fahrzeugs.**

(30) Priorität: **13.03.91 DE 4108059**

(43) Veröffentlichungstag der Anmeldung:
**16.09.92 Patentblatt 92/38**

(45) Bekanntmachung des Hinweises auf die Patenterteilung:
**30.11.94 Patentblatt 94/48**

(84) Benannte Vertragsstaaten:
**AT BE CH DE DK ES FR GB IT LI NL PT SE**

(56) Entgegenhaltungen:
**AU-B- 560 046
DE-U- 8 910 936
US-A- 4 501 385**

**PATENT ABSTRACTS OF JAPAN vol. 12, no. 272 (M-724)(3119) 28. Juli 1988; & JP-A-63 053143**

(73) Patentinhaber: **VOTEX GmbH
An der Trift 67
D-63303 Dreieich (DE)**

(72) Erfinder: **Dümmler, Stephan, Dipl.-Ing.
Im Jochert 45
W-6074 Rödermark (DE)**

(74) Vertreter: **Neubauer, Hans-Jürgen, Dipl.-Phys.
Neubauer & Ott,
Fauststrasse 30
D-85051 Ingolstadt (DE)**

EP 0 503 306 B1

## Beschreibung

Die Erfindung betrifft eine Querschnittsform eines Querträgers an einem Dachgepäckträger eines Fahrzeugs nach dem Oberbegriff des Anspruchs 1.

Dachgepäckträger bestehen üblicherweise aus quer oberhalb des Daches angeordneten Querträgern, die über Stützfüße seitlich am Dach gehalten und abgestützt sind. Bei herkömmlichen Fahrzeugen sind die Stützfüße mit Spannklammern an den Dachregenrinnen befestigt. Bei modernen, aeordynamisch optimierten Fahrzeugen sind keine Dachregenrinnen vorhanden, wodurch andere und aufwendigere Konstruktionen mit Abstützplatten und Spannklammern nach Art einer Zange erforderlich sind (DE-OS 34 06 431). Weiter sind Fahrzeuge, insbesondere Kombifahrzeuge und Geländefahrzeuge, mit einer Dachreling, bestehend aus je einem seitlich am Dach in Längsrichtung verlaufenden Relingrohr bekannt. Dachgepäckträger bestehen auch hier aus Querträgern, die mit den Relingrohren über Spanneinrichtungen verbunden sind.

Bei allen vorstehend genannten Ausführungsformen von Dachgepäckträgern sind jeweils Querträger als Tragrohre verwendet, die oberhalb und in einem Abstand zum Fahrzeugdach quer zur Fahrtrichtung verlaufen.

Übliche Querträgerausführungen bestehen aus im Querschnitt quadratischen oder rechteckigen Profilen (DE-PS 35 16 483; DE-PS 31 04 163) oder runden Profilformen (DE-PS 35 10 805). Ersichtlich wird die Aerodynamik eines Fahrzeugs durch solche quer zur Fahrtrichtung oberhalb des Fahrzeugdaches verlaufende Querträger generell ungünstig beeinflußt. Ebenso werden die Fahrgeräusche durch den ungünstigeren Strömungsverlauf der anstromenden Luft um die Querträger generell erhöht.

Besonders ungünstige Verhältnisse bestehen bei den üblichen, quadratischen oder rechteckigen Querschnittsformen der Querträger, wo durch starke Verwirbelungen an den Kanten, insbesondere ein hoher Geräuschpegel bei schnellen Fahrten, entsteht. Auch die bekannten, runden Querschnitte zeigen ein nicht wesentlich besseres Verhalten.

Um hier eine Verbesserung zu schaffen, ist es bereits bekannt (DE-OS 36 07 856), die Querträger im Querschnitt eiförmig oder tropfenförmig zu gestalten, wodurch eine günstigere, aerodynamische Form mit einer Reduzierung des Geräuschpegels erreicht wird. Weitere Maßnahmen zur Verbesserung der Aerodynamik bestehen darin, daß die Formen zwischen Querträger und Stützfüßen glattflächig ineinander übergehen und an den Abstützfüßen Abdeckkappen vorgesehen sind.

Beim vorstehend beschriebenen Querschnitt als Eiform oder Tropfenform liegt die Symmetrieachse waagrecht über dem Fahrzeugdach, wobei der Bogen mit der geringeren Krümmung in Fahrtrichtung weist. Der Bogenbereich mit der größeren Krümmung bzw. dem kleineren Krümmungsradius ist zur rückwärtigen Fahrzeugseite gerichtet. Durch die im wesentlichen symmetrische Form bezüglich einer waagrechten Ebene wird im Prinzip etwa der gleiche Anteil der anströmenden Luft über und unter dem Querträgerprofil abgeleitet. Insbesondere durch die zum Dach hin nach unten abgeleitete Luftströmung entstehen auch bei dieser Profilausbildung relativ hohe Windgeräusche. Um ein stabiles Profil mit geeignet hohen Trageigenschaften zu erhalten, ist ein Strangpreßprofil mit einer senkrecht stehenden, durchgehenden Innenwand vorgesehen.

Bei einer weiteren, bekannten Ausführungsform eines Querträgers (US-A-4 501 385) für einen Dachgepäckträger, von dem im Oberbegriff des Anspruchs 1 ausgegangen wird, wird ein aerodynamisch günstiger Profilquerschnitt angestrebt. Dazu sind eine flache Unterseite und eine flache Oberseite durch seitliche Bogenformen miteinander verbunden. Dieser Profilquerschnitt ist in seiner Ausbildung hinsichtlich der Aerodynamik und der Windgeräusche weiter verbesserungsfähig.

Die Aufgabe der Erfindung besteht darin, durch eine geeignete Querschnittsform des Querträgers eine weitere Verbesserung der Aerodynamik des Fahrzeugs und eine Reduzierung des Geräuschpegels bei montiertem Dachgepäckträger zu erreichen.

Diese Aufgabe wird mit den Merkmalen des Anspruchs 1 gelöst.

Gemäß Anspruch 1 weisen die konvex gekrümmten Seitenflächen im Querschnitt gesehen je einen ersten Bogenbereich mit starker Krümmung bzw. kleinem Krümmungsradius auf, der ausgehend von der Unterseite jeweils seitlich nach außen verläuft. Die konvex gekrümmten Seitenflächen weisen im Querschnitt gesehen je einen zweiten Bogenbereich mit einer gegenüber dem ersten Bogenbereich kleineren Krümmung bzw. größerem Krümmungsradius auf, der ausgehend von der Oberseite seitlich nach außen verläuft. Der erste Bogenbereich und der zweite Bogenbereich gehen kontinuierlich ineinander über, wobei am Übergang zu beiden Seiten des Querträgers je ein Umkehrpunkt bestimmt ist und diese Umkehrpunkte die Breite des Querträgers bestimmen.

Mit diesem Profilquerschnitt wird eine aerodynamisch günstige Anordnung mit geringer Geräuschentwicklung erreicht.

Die Oberseite und die Unterseite des Querträgers sind über konvex gekrümmte und abgerundete Seitenflächen verbunden, wobei die Breite der unteren Seite größer als die Breite der Oberseite des Querträgers ist. Als besonders günstig hat sich ein Breitenverhältnis zwischen unterer Seite und Oberseite im Rahmen der nachfolgenden Beziehung gemäß Anspruch 2 erwiesen:

$$\frac{a}{b} = \frac{1}{1,5 \text{ bis } 3,}$$

wobei mit a die Breite der Oberseite und mit b die Breite der unteren Seite bezeichnet sind.

Durch diese Maßnahme, daß die dem Fahrzeugdach zugewandte Unterseite breiter als die Oberseite des Querträgers ist, wird bereits ein günstigerer Strömungsverlauf um den Querträger erreicht, der zur Verbesserung der Aerodynamik und zur Senkung des Geräuschpegels beiträgt.

Die Bogenkrümmungen sind dabei nach Anspruch 3 bevorzugt so zu wählen, daß die Umkehrpunkte in einem Höhenbereich von 25 % bis 40 % der Gesamthöhe des Querträgers bezogen auf die Unterseite des Querträgers (Grundlinie) liegen. Diese Umkehrpunkte liegen somit tiefer als die Höhenmitte des Querträgerprofils, wodurch ein größerer Anteil der anströmenden Luft über den Querträger im Vergleich zu der unter dem Querträger strömenden Luft geleitet wird. Bei modernen Fahrzeugen mit relativ geringen Wind- und Strömungsgeräuschen liegt die Strömung weitestgehend auf der Dachfläche an. Zusätzliche Dachaufbauten in der vorliegenden Form der Querträger sollen diese am Dach anliegende Strömung sowenig wie möglich stören, so daß die hinter das Querträgerprofil strömende Luft möglichst lang (in Abhängigkeit der Profilhöhe) weitestgehend parallel zum Fahrzeugdach geführt werden soll. Dies wird u. a. durch die relativ geringe Höhenlage der "Umkehrpunkte" am Querträgerprofil erreicht.

Abrißgeräusche an der Profilunterseite sind hauptsächlich über das Fahrzeugdach, das als "Resonanzboden" wirkt, im Fahrzeuginnenraum zu hören. Insbesondere ist eine Eiform oder Tropfenform nach dem Stand der Technik im Vergleich zu der erfindungsgemäßen Form zu kurz und zieht an der Unterseite zu schnell nach oben, wodurch mehr Geräusche verursacht werden.

Eine zusätzliche Verbesserung der Aerodynamik und des Geräuschverhaltens wird mit den Merkmalen des Anspruchs 4 erreicht. Die Unterseite des Querträgers ist dabei als konvex gekrümmte Unterfläche mit einem im Querschnitt gesehen, dritten Bogenbereich mit relativ kleiner Krümmung bzw. mit sehr großem Krümmungsradius ausgebildet. Damit ist die Unterfläche auch bei dieser Ausführungsform weitgehend flach mit nur geringer Krümmung gestaltet. Ein geeignetes Maß für die Krümmung wird mit Anspruch 5 angegeben, mit einer "Sehnenhöhe" gegenüber einer geraden, waagrechten, durch den Krümmungsradius des dritten Bogenbereichs bei der Breite(b) schneidenden Grundlinie von 0 bis 5 mm. An diesen dritten, unteren Bogenbereich sollen sich zu beiden Seiten die ersten Bogenbereiche mit relativ größerer Krümmung kontinuierlich anschließen.

Das erfindungsgemäße Profil ist einfach und kostengünstig als Strangprofil herstellbar, wobei eine durchgehende, senkrechte Profilinnenwand entbehrlich ist. Nach Anspruch 6 können jedoch, insbesondere an der unteren Innenwand, Verstärkungsrippen angeformt sein.

In an sich bekannter Weise enthält nach Anspruch 7 auch das erfindungsgemäße Profil einen oberen Längskanal mit Hinterschneidungen zur Aufnahme von Gummiprofilen und/oder Anbauteilen.

Der erfindungsgemäße Querträger kann in bekannter Weise mit seitlichen Stützfüßen und/oder Spanneinrichtungen zu einem Dachgepäckträger montiert werden.

Anhand einer Zeichnung wird die Erfindung mit weiteren Einzelheiten, Merkmalen und Vorteilen näher erläutert.

Es zeigen

Fig. 1    eine schematische Darstellung der Querschnittsform eines Querträgers für einen Dachgepäckträger zur Erläuterung des Profilquerschnitts und

Fig. 2    einen Querschnitt durch eine konkrete Ausführung eines Querträgers gemäß Fig. 1.

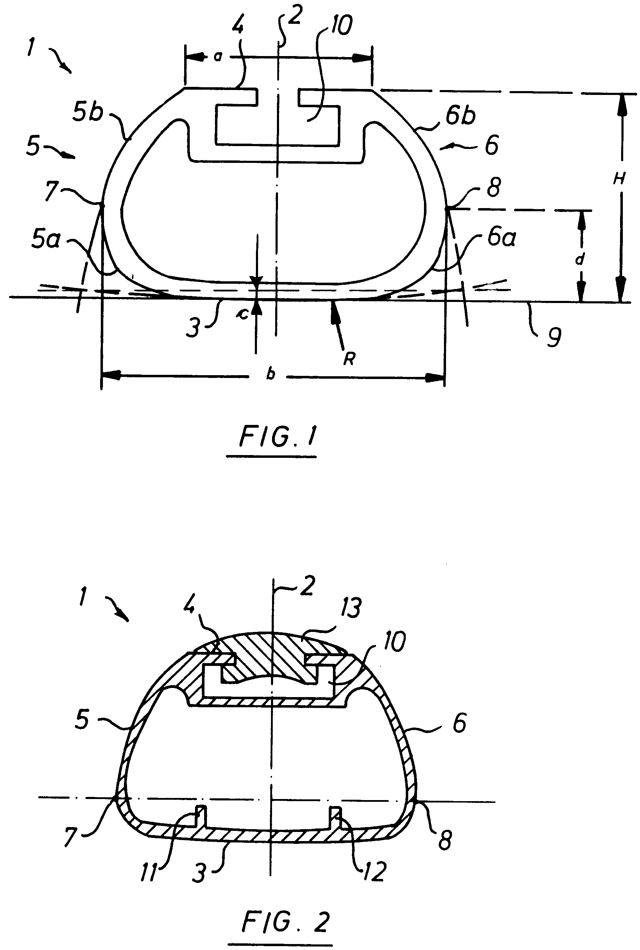

In Fig. 1 ist die Querschnittsform eines Querträgers 1 für einen Dachgepäckträger gezeigt, mit Außenflächen, die bezüglich einer senkrechen Querträger-Längsebene 2 symmetrisch sind. Die Unterseite 3 des Querträgers 1 ist weitgehend flach ausgebildet, wobei die einem (nicht dargestellten) Fahrzeugdach zugewandte, nach unten weisende Breite mit dem Bezugszeichen b bezeichnet ist. Die Breite der Oberseite 4 des Querträgers 1 ist mit dem Bezugszeichen a angegeben. Die Breite b ist ersichtlich größer als die Breite a.

Die Oberseite 4 und die Unterseite 3 des Querträgers 1 sind über konvex gekrümmte und abgerundete Seitenflächen 5 und 6 verbunden. Ausgehend von der Unterseite 3 verlaufen die Seitenflächen jeweils mit einem ersten Bogenbereich 5a, 6a mit starker Krümmung bzw. kleinem Krümmungsradius seitlich nach außen. Entsprechend verläuft, ausgehend von der Oberseite 4, jeweils ein zweiter Bogenbereich 5b, 6b mit kleinerer Krümmung bzw. größerem Krümmungsradius.

Der jeweilige erste Bogenbereich 5a, 6a und der zweite Bogenbereich 5b, 6b gehen kontinuierlich ineinander über, wobei am Übergang zu beiden Seiten des Querträgers 1 je ein "Umkehrpunkt" 7, 8 für die Form bestimmt ist, wobei diese Umkehrpunkte auch die Querträgerbreite bzw. die dem Fahrzeugdach zugewandte, untere Breite b bestimmen. Die Krümmungen sind so gewählt, daß die Umkehrpunkte 7, 8, bezogen auf eine Grundlinie 9, in einer Höhe d liegen und diese Höhe d in einem Bereich zwischen 25 % bis 40 % der gesamten Profilhöhe H liegt.

Die Unterseite 3 ist nicht genau eben, sondern mit einer sehr kleinen Krümmung, entsprechend einem sehr großen Krümmungsradius R, ausgeführt. Mit dem Bezugszeichen c ist die Größe der Krümmung in der Art einer "Sehnenhöhe" angegeben, wobei diese in einem Bereich zwischen 0 bis 5 mm liegen kann. Die Unterseite 3 stellt somit einen dritten Bogenbereich dar, an den sich die zweiten Bogenbereiche 5b, 6b kontinuierlich anschließen.

Am Querträger 1 ist in an sich bekannter Weise ein oberer Längskanal 10 zur Aufnahme von Gummiprofilen und/oder Anbauteilen vorgesehen.

In Fig. 2 ist ein Querschnitt durch einen konkret ausgeführten Querträger 1 dargestellt, mit konvex gekrümmten Seitenflächen 5, 6 und (relativ tief liegenden) Umkehrpunkten 7, 8.

Die Unterseite 3 ist auch hier als dritter Bogenbereich mit schwacher Krümmung ausgeführt. An der Innenseite sind zwei längs verlaufende Verstärkungsrippen 11, 12 angeformt.

An der Oberseite 4 ist auch hier ein Längskanal 10 angebracht, der durch ein eingeklipstes Gummiprofil 13 mit relativ flacher Krümmung nach außen abgedeckt ist.

Durch eine günstigere Strömungsverteilung der anströmenden Luft wird mit dem erfindungsgemäßen Querschnitt eine Verbesserung bezüglich der Aerodynamik und des Geräuschverhaltens erreicht.

**Patentansprüche**

1. Querschnittsform eines Querträgers (1) an einem Dachgepäckträger eines Fahrzeugs, mit im Querschnitt gesehen, abgerundeten Außenflächen, wobei die Außenflächen bezüglich einer senkrechten Querträger-Längsebene (2) symmetrisch sind, die Unterseite (3) des Querträgers (1) als weitgehend flache, horizontale Unterfläche ausgebildet ist und der Querträger (1) eine dem Fahrzeugdach zugewandte untere Seite der Breite (b) aufweist, die Oberseite (4) des Querträgers (1) als relativ flache, horizontale Oberfläche ausgebildet ist, mit einer dem Fahrzeugdach abgewandten Oberseitenbreite (a), die Oberseite (4) und die Unterseite (3) des Querträgers (1) über konvex gekrümmte und abgerundete Seitenflächen (5, 6) verbunden sind und die Breite (b) der dem Fahrzeugdach zugewandten Seite des Querträgers (1) größer als die Breite (a) der flachen Oberseite (4) des Querträgers (1) ist, dadurch gekennzeichnet, daß die konvex gekrümmten Seitenflächen (5, 6) im Querschnitt gesehen je einen ersten Bogenbereich (5a, 6a) mit starker Krümmung bzw. kleinem Krümmungsradius aufweisen, der ausgehend von der Unterseite (3) jeweils seitlich nach außen verläuft, daß die konvex gekrümmten Seitenflächen (5, 6) im Querschnitt gesehen je einen zweiten Bogenbereich (5b, 6b) mit einer gegenüber dem ersten Bogenbereich (5a, 6a) kleineren Krümmung bzw. größerem Krümmungsradius aufweisen, der ausgehend von der Oberseite (4) seitlich nach außen verläuft, daß der erste Bogenbereich (5a, 6a) und der zweite Bogenbereich (5b, 6b) kontinuierlich ineinander übergehen, wobei am Übergang zu beiden Seiten des Querträgers (1) je ein Umkehrpunkt (7, 8) bestimmt ist und diese Umkehrpunkte (7, 8) die Breite (b) des Querträgers (1) bestimmen.

2. Querschnittsform eines Querträgers nach Anspruch 1, dadurch gekennzeichnet, daß das Breitenverhältnis zwischen der dem Fahrzeugdach zugewandten Seite und der Oberseite im Rahmen der nachfolgenden Beziehung gewählt ist:

$$\frac{a}{b} = \frac{1}{1,5 \text{ bis } 3.}$$

3. Querschnittsform eines Querträgers nach Anspruch 1 oder 2, dadurch gekennzeichnet, daß die Umkehrpunkte (7, 8) in einem Höhenbereich (d) von 25 % bis 40 % der Gesamthöhe (H) des Querträgers (1) bezogen auf die Unterseite (3) des Querträgers (1) liegen.

4. Querschnittsform eines Querträgers nach einem der Ansprüche 1 bis 3, dadurch gekennzeichnet, daß die Unterseite (3) des Querträgers (1) als konvex gekrümmte Unterfläche ausgebildet ist, mit einem im Querschnitt gesehen, dritten Bogenbereich relativ kleiner Krümmung bzw. mit sehr großem Krümmungsradius (R), daß sich an den dritten Bogenbereich zu beiden Seiten die ersten Bogenbereiche (5a, 6a) mit relativ größerer Krümmung bzw. kleinerem Krümmungsradius kontinuierlich anschließen.

**5.** Querschnittsform eines Querträgers nach Anspruch 4, dadurch gekennzeichnet, daß die nach unten zum Fahrzeugdach weisende Krümmung im dritten Bogenbereich nur gering ist, mit einer nach unten gerichteten Sehnenhöhe (c) gegenüber einer geraden, waagrechten, durch den Krümmungsradius des dritten Bogenbereichs bei der Breite (b) schneidenden Grundlinie (9) von 0 bis 5 mm.

**6.** Querschnittsform eines Querträgers nach einem der Ansprüche 1 bis 5, dadurch gekennzeichnet, daß der Querträger (1) ein als Strangprofil hergestelltes Hohlprofil ggfs. mit innenliegenden Verstärkungsrippen (11, 12) ist.

**7.** Querschnittsform eines Querträgers nach einem der Ansprüche 1 bis 6, dadurch gekennzeichnet, daß der Querträger (1) einen oberen Längskanal (10) mit Hinterschneidungen zur Aufnahme von Gummiprofilen (13) und/oder Anbauteilen aufweist.

**Claims**

**1.** A cross-sectional shape of a crossbar (1) on the roof rack of a vehicle, with rounded outer surfaces as viewed in cross-section, in which arrangement the outer surfaces are symmetrical with respect to a vewrtical longitudinal plane (2) of the crossbar, the lower side (3) of the crossbar (1) is designed as a largely flat horizontal lower surface and the crossbar (1) has a lower side of width (b), facing the vehicle roof, the upper side (4) of the crossbar (1) is designed as a relatively flat horizontal upper surface with an upper side width (a) that is remote from the vehicle roof, the upper side (4) and the lower side (3) of the crossbar (1) are joined via rounded side faces (5, 6) with a convex curvature and the width (b) of the side of the crossbar (1) facing the vehicle roof is greater than the width (a) of the flat upper side (4) of the crossbar (1), characterized in that the side faces (5, 6) with the convex curvature have, as viewed in cross-section, one first arcuate zone (5a, 6a) each, with a pronounced curvature or a small radius of curvature which, starting from the lower side (3), extends in each case laterally outwards, that the side faces (5, 6) with the convex curvature have, as viewed in cross-section, a second arcuate zone (5b, 6b) each, with a smaller curvature as compared with the first arcuate zone (5a, 6a) or a larger radius of curvature which, starting from the upper side (4), extends laterally outwards, that the first arcuate zone (5a, 6a) and the second arcuate zone (5b, 6b) pass into each other continuously, in which arrangement one change-over point (7, 8) each is defined at the transition to the two sides of the crossbar (1) and that these change-over points (7, 8) define the width (b) of the crossbar (1).

**2.** A cross-sectional shape of a crossbar according to claim 1, characterized in that the width ratio between the side facing the vehicle roof and the upper side are chosen within the scope of the following relation:

$$\frac{a}{b} = \frac{1}{1.5 \text{ to } 3},$$

**3.** A cross-sectional shape of a crossbar according to claim 1 or 2, characterized in that the change-over points (7, 8) lie within a height range (d) of 25% to 40% of the total height (H) of the crossbar (1) with respect to the lower side (3) of the crossbar (1).

**4.** A cross-sectional shape of a crossbar according to one of claims 1 to 3, characterized in that the lower side (3) of the crossbar (1) is designed as a lower surface with a convex curvature with a third arcuate zone, as viewed in cross-section with a relatively slight curvature or with a very large radius of curvature (R), that the first arcuate zones (5a, 6a) with a relatively greater curvature or a smaller radius of curvature continuously join up with the third arcuate zone on both sides.

**5.** A cross-sectional shape of a crossbar according to claim 4, characterized in that the curvature in the third arcuate zone that faces downward towards the vehicle roof is only slight, with a downwardly directed chord height (c) of from 0 to 5 mm with respect to a straight horizontal base line (9) intersecting the radius of curvature of the third arcuate zone at width (b).

**6.** A cross-sectional shape of a crossbar according to one of claims 1 to 5, characterized in that the crossbar (1) is a hollow section produced as an extruded section with internal reinforcing ribs (11, 12), if required.

7. A cross-sectional shape of a crossbar according to one of claims 1 to 6, characterized in that the crossbar (1) has an upper longitudinal channel (10) with undercuts for receiving rubber sections (13) and/or attachments.

**Revendications**

1. Forme en coupe transversale d'une traverse (1) de porte-bagages de toit pour véhicule,

   ayant des surfaces extérieures qui, vues en coupe transversale, sont arrondies,

   les surfaces extérieures étant symétriques par rapport à un plan longitudinal et vertical (2) de la traverse,

   le côté inférieur (3) de la traverse (1) étant réalisé sous forme de surface inférieure horizontale, largement plane, et la traverse (1) présentant un côté inférieur, dirigé vers le toit du véhicule, de largeur (b),

   le côté supérieur (4) de la traverse (1) étant réalisé sous forme de surface supérieure horizontale, relativement plane, avec une largeur (a) de ce côté supérieur dirigé à l'opposé du toit du véhicule,

   le côté supérieur (4) et le côté inférieur (3) de la traverse (1) étant reliés par des surfaces latérales (5, 6) arrondies avec une courbure convexe, et

   la largeur (b) du côté de la traverse (1) dirigé vers le toit du véhicule étant plus grande que la largeur (a) du côté supérieur plan (4) de la traverse (1),

   caractérisée en ce que

   les surfaces latérales à courbure convexe (5, 6), vues en coupe transversale, présentent chacune une première partie courbe (5a, 6a) à forte courbure ou à petit rayon de courbure qui, à partir du côté inférieur (3), s'étend latéralement vers l'extérieur,

   en ce que les surfaces latérales à courbure convexe (5, 6), vues en coupe transversale, présentent chacune une seconde partie courbe (5b, 6b) qui a une plus faible courbure ou un plus grand rayon de courbure par rapport à la première partie courbe (5a, 5b) et qui, à partir du côté supérieur (4), s'étend latéralement vers l'extérieur, et

   en ce que la première partie courbe (5a, 6a) et la seconde partie courbe (5b, 6b) se fondent l'une dans l'autre sans solution de continuité, un point de retour (7, 8) étant défini à la jonction de chaque côté de la traverse (1) et ces points de retour (7, 8) déterminant la largeur (b) de la traverse (1).

2. Forme en coupe transversale d'une traverse selon la revendication 1, caractérisée en ce que le rapport de largeurs entre le côté dirigé vers le toit du véhicule et le côté supérieur est choisi dans le cadre de la relation suivante:

$$\frac{a}{b} = \frac{1}{1,5 \text{ à } 3}$$

3. Forme en coupe transversale d'une traverse selon la revendication 1 ou 2, caractérisée en ce que les points de retour (7, 8) sont situés, par rapport au côté inférieur (3) de la traverse (1), à une hauteur (d) comprise entre 25% et 40% de la hauteur totale (H) de la traverse (1).

4. Forme en coupe transversale d'une traverse selon l'une quelconque des revendications 1 à 3, caractérisée en ce que le côté inférieur (3) de la traverse (1) est réalisé sous forme de surface inférieure à courbure convexe qui, vue en coupe transversale, présente une troisième partie courbe qui a une courbure relativement faible ou un très grand rayon de courbure (R), et

   en ce que les premières parties courbes (5a, 6a) qui ont une courbure relativement forte ou un plus petit rayon de courbure se raccordent des deux côtés, sans solution de continuité, à cette troisième partie courbe.

5. Forme en coupe transversale d'une traverse selon la revendication 4, caractérisée en ce que la courbure dirigée vers le bas, vers le toit du véhicule, dans la troisième partie courbe n'est que légère, avec une flèche (c), dirigée vers le bas, de 0 à 5 mm par rapport à une ligne droite horizontale de base (9) coupant le rayon de courbure de la troisième partie courbe sur la largeur (b).

6. Forme en coupe transversale d'une traverse selon l'une quelconque des revendications 1 à 5, caractérisée en ce que la traverse (1) est un profilé creux fabriqué sous forme de profilé filé, comportant éventuellement des nervures de renforcement internes (11, 12).

7. Forme en coupe transversale d'une traverse selon l'une quelconque des revendications 1 à 6, caractérisée en ce que la traverse (1) présente une gorge longitudinale supérieure (10) à contre-dépouilles pour recevoir des profilés en caoutchouc (13) et/ou des pièces à rapporter.

FIG. 1

FIG. 2